# EUROPÄISCHE PATENTSCHRIFT

(11) **EP 1 044 779 B1**
(45) Veröffentlichungstag und Bekanntmachung des Hinweises auf die Patenterteilung: **29.05.2002**
(21) Anmeldenummer: 00104683.8
(22) Anmeldetag: 03.03.2000
(51) Int. Cl.: B29C 45/14

(54) **Verfahren zur Herstellung von aus Metall bestehenden Gehäuse- oder Stellteilen**
Method for producing metallic housing or positioning parts
Procédé pour fabriquer des parties de boîter ou de positionnement en métal

(30) Priorität: 07.04.1999 DE 19915510
(43) Veröffentlichungstag der Anmeldung: 18.10.2000
(73) Patentinhaber: Preh-Werke GmbH & Co. KG, 97616 Bad Neustadt a.d. Saale (DE)
(72) Erfinder: Bauer, Karl-Heinz, 97616 Bad Neustadt (DE); Storath, Joachim, 97916 Salz (DE); Eckert, Gerold, 97616 Bad Neustadt (DE); Müller, Klaus, 97618 Unsleben (DE)

(56) Entgegenhaltungen:
- DE-C- 903 316
- FR-A- 2 260 441
- HELLA KG: "Optimales Klima durch vollautomatisches Regelsystem" ATZ-AUTOMOBIELTECHNISCHE ZEITSCHRIFT, Bd. 100, Nr. 12, Dezember 1998 (1998-12), Seite 879 XP002141240

## Beschreibung

Die Erfindung betrifft ein Verfahren zur Herstellung von aus Metall bestehenden Gehäuse- oder Stellteilen, die eine aus transparentem Kunststoff bestehende Anzeigeeinlage aufweisen.

Diese aus Metall bestehenden Gehäuse- oder Stellteile verbessern gegenüber aus Kunststoff hergestellten das Aussehen und die Überwachbarkeit diverser Bedieneinrichtungen in Fahrzeugen, beispielsweise für Navigations- oder Heizungsregelungssysteme, Beleuchtungseinrichtungen usw.

Aus der ATZ-Automobiltechnische Zeitschrift, Druck Dezember 1998, Nr. 12, Seite 879 ist hierfür ein Beispiel entnehmbar. Es heißt dort bereits, bei der Entwicklung eines Klimaregelungssystems spielt das Design eine wichtige Rolle. Bei dem dort beschriebenen System ist daher vorgesehen, daß die beiden Drehschalter für die Temperatureinstellung mit je einem geschmiedeten Aluminiumring hinterlegt sind, in den Lichtleiter für den Nachtbetrieb integriert sind.

In der dort gezeigten Abbildung eines Bedienteils mit den hinterlegten Aluminiumringen sind einmal die in den Ringen integrierten Lichtleiter als Symbole erkennbar, jedoch auch weitere Symbole, die auf Drucktasten angeordnet sind. Gegenüber den Symbolen der Ringe lassen die der Drucktasten deutlich sogenannte Inseln innerhalb der Symbole erkennen, die nicht transparent sind.

Diese Inseln sind der Grund dafür, daß diese Symbole nicht in aus Metall bestehende Gehäuse- oder Stellteile angeordnet werden, da diese Inseln bei der Herstellung der mit transparentem Kunststoff zu füllenden Ausnehmungen herausfallen würden.

Hiervon ausgehend liegt der Erfindung die Aufgabe zugrunde, Maßnahmen für ein Verfahren zur Herstellung dieser aus Metall bestehenden Gehäuse- oder Stellteile aufzufinden, mit denen eine Verwendung auch von Symbolen mit Inseln möglich wird.

Diese Aufgabe wird durch die Merkmale des Anspruchs 1 gelöst. Vorteilhafte weitere Maßnahmen sind in den Unteransprüchen angegeben.

Das erfindungsgemäße Verfahren wird nachfolgend im Zusammenhang mit der Herstellung eines in der Zeichnung dargestellten Aluminiumringes und eines Drucktastenschalters beschrieben.

Die Zeichnung zeigt:
- **Fig. 1 und 2:**: einen Aluminiumring als Draufsicht und als Querschnitt,

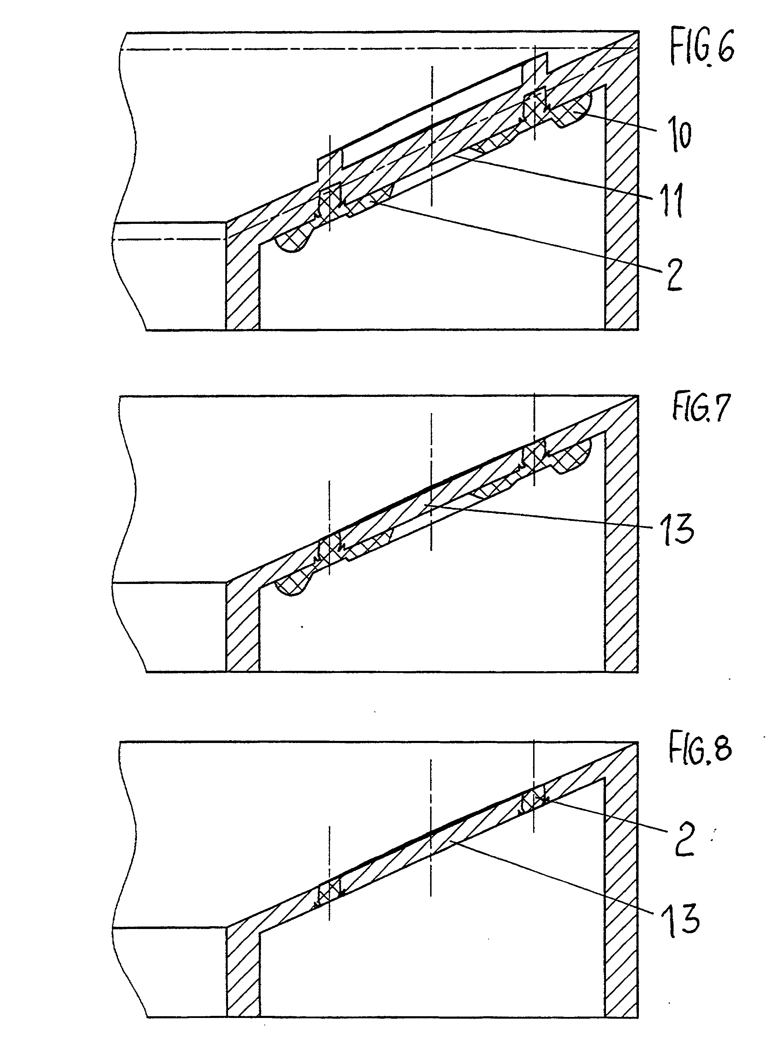

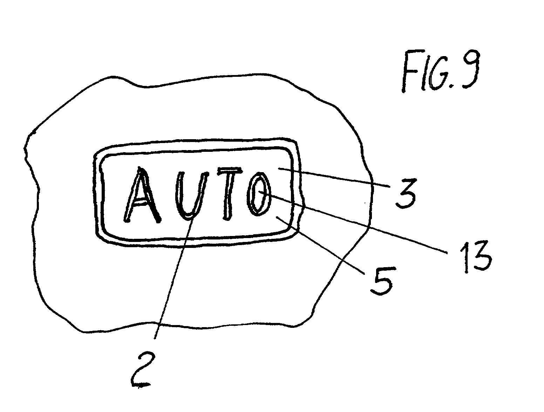

- **Fig. 3 bis 8:**: Ausschnittsvergrößerungen der Fig. 2 in den Ausbildungen entsprechend den Verfahrensschritten,
- **Fig. 9**: eine Ansicht eines Drucktastenschalters mit einer Inseln aufweisenden Symbolik.

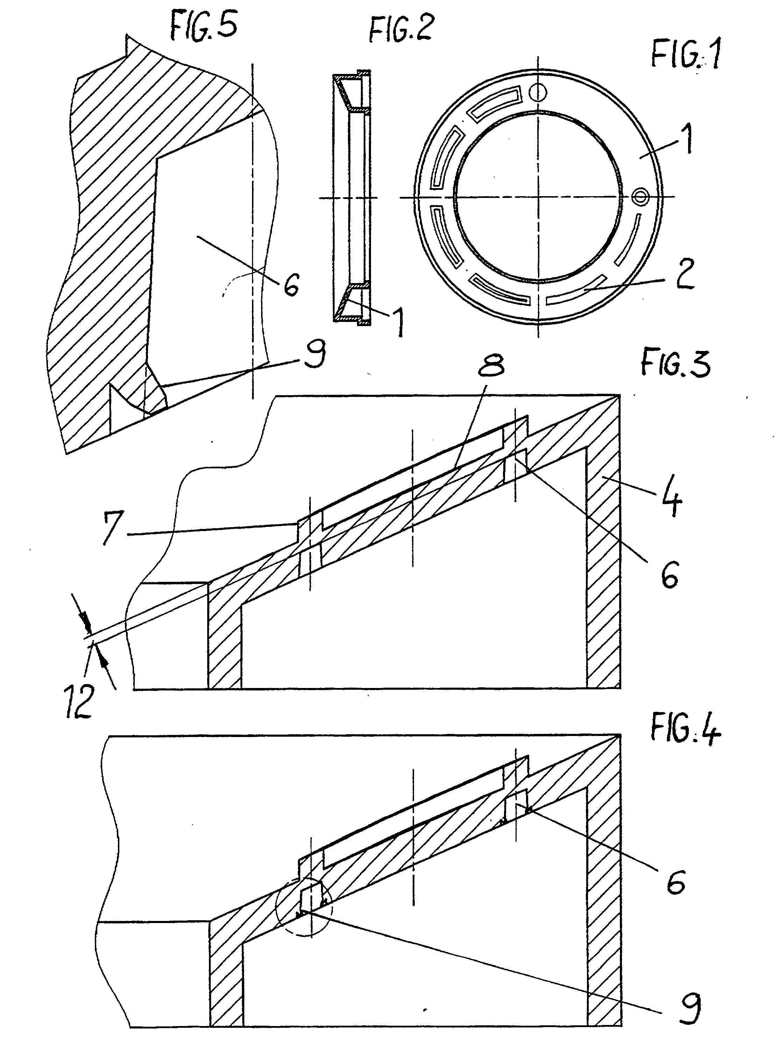

Fig. 1 zeigt die Ansicht eines Aluminiumringes 1, der als Teil eines nicht dargestellten feststehenden Bedienteilgehäuses einem Drehschalter hinterlegt sein soll. Das Bedienteil selbst ist in ein Fahrzeug einbaubar.

Der Aluminiumring 1 ist mit einer aus transparentem Kunststoff 2 bestehenden Anzeigeeinlage ausgestattet, die von hinten beleuchtet als Nachtanzeige dienen soll. Dieser Aluminiumring 1 kann ebenso wie ein in Fig. 9 dargestellter Drucktastenschalter 3 in einem Verfahren zur Herstellung von aus Metall bestehenden Gehäuse- oder Stellteilen, die mit einer aus transparentem Kunststoff bestehenden Anzeigeeinlage ausgestattet sind, gefertigt werden, wobei folgende Verfahrensschritte vorgesehen sind:
Herstellen des Gehäuse- oder Stellteils 1, 3 als geschmiedeter oder gegossener Rohling 4, 5,
Einbringen einer Ausnehmung 6 für die aus transparentem Kunststoff 2 bestehende Anzeigeeinlage mittels eines Stanzstempels in einer Stanzvorrichtung unter Aufwerfung 7 der in Stanzrichtung rückseitigen Wandungsfläche 8, wie in Fig. 3 dargestellt ist,
Einschnürung der Ausnehmung 6 durch eine Keil-Schälverformung der Begrenzungswände 9 der Ausnehmung 6, durch die damit hergestellte Hinterschneidung soll später die Anzeigeeinlage innerhalb der Ausnehmung 6 festgehalten werden,
Einspritzen des transparenten Kunststoffs 2 in die Ausnehmung 6 und ggf. in eine mit der Ausnehmung 6 verbundene Form zur Bildung eines Kragens 10 auf einer in Stanzrichtung vorderseitigen Wandungsfläche 11, hierdurch findet eine weitere Halterung des Kunststoffs 2 bzw. der Anzeigeeinlage in dem Gehäuse- oder Stellteil 1 oder 3 statt,
Abtragung der rückseitigen Wandungsfläche 8 und der Aufwerfung 7 um einen festgelegten Dickebetrag 12, der eine Freilegung der Ausnehmung 6 bzw. des transparenten Kunststoffs 2 bewirkt, d. h. die Einbringung der Ausnehmung 6 erfolgte um den Dickebetrag 12 reduziert, die Wandung in diesem Dickebetrag hält Inseln 13 der Symbole beim Einspritzen in ihrer vorgesehenen Position.

Es ist vorteilhaft, wenn anschließend ein weiterer Verfahrensschritt vorgenommen wird, Oberflächenschützen der durch Abtragung freigelegten Wandungsfläche 8, wobei dieses durch Erzeugen einer Eloxalschicht erfolgen kann, wenn Gehäuse- oder Stellteile 1, 3 aus Aluminium oder einer Al-haltigen Legierung bestehen, wobei die Eloxierung unter elektrischer Kontaktierung auch jeder der durch die Abtragung elektrisch separierten Inseln 13 erfolgt.

Es ist vorgesehen, daß eine mechanische Abtragung, z. B. durch Drehen oder Fräsen, des Dickebetrages 12 oder eine mechanische Abtragung der Aufwerfung und eine anschließende Freilegung der Ausnehmung 6 bzw. des transparenten Kunststoffs 2 durch Laserabtragung erfolgt.

Es kann erforderlich sein, daß in einem weiteren Verfahrensschritt eine Abtragung des Kragens 10 auf der vorderseitigen Wandungsfläche 11 erfolgt, um eine größere Transparenz der Anzeigeeinlage zu erreichen.

Die Bearbeitung des in Fig. 9 dargestellten Drucktastenschalters 3 erfolgt sinngemäß wie die des Aluminiumringes 1.

Der Aluminiumring 1 oder der Drucktastenschalter 3 kann nach der Erzeugung der Eloxalschicht eingefärbt werden.

Es versteht sich von selbst, daß die Gehäuseteile 1 mit der Kunststoffeinlage auch nur für dekorative Zwecke verwendet werden können, z. B. für eine Umrandung eines Luftaustritts.

## Patentansprüche

1. Verfahren zur Herstellung von aus Metall bestehenden Gehäuse- oder Stellteilen, die mit einer aus transparentem Kunststoff bestehenden Anzeigeeinlage ausgestattet sind, das folgende Verfahrensschritte umfasst :
Herstellen des Gehäuse- oder Stellteils (1, 3) als geschmiedeter oder gegossener Rohling (4, 5),
Einbringen einer Ausnehmung (6) für die Anzeigeeinlage mittels eines Stanzstempels in einer Stanzvorrichtung unter Aufwerfung (7) einer in Stanzrichtung rückseitigen Wandungsfläche (8),
Einschnürung der Ausnehmung (6) durch eine Keil-Schälverformung der Begrenzungswände (9) der Ausnehmung (6),
Einspritzen des transparenten Kunststoffs (2) in die Ausnehmung (6) und ggf. in eine mit der Ausnehmung (6) verbundene Form zur Bildung eines Kragens (10) auf einer in Stanzrichtung vorderseitigen Wandungsfläche (11),
Abtragung der rückseitigen Wandungsfläche (8) mit der Aufwerfung (7) um einen festgelegten Dickebetrag (12), der eine Freilegung der Ausnehmung (6) bzw. des transparenten Kunststoffs (2) bewirkt.

2. Verfahren nach Anspruch 1, **gekennzeichnet durch** Oberflächenschützen der **durch** Abtragung freigelegten Wandungsfläche (8).

3. Verfahren nach Anspruch 2, **gekennzeichnet durch** Oberflächenschützen **durch** Erzeugen einer Eloxalschicht, wenn Gehäuse- oder Stellteile (1, 3) aus Aluminium oder einer Al-haltigen Legierung bestehen, wobei die Eloxierung unter elektrischer Kontaktierung jeder der **durch** die Abtragung elektrisch separierten Inseln (13) innerhalb der Anzeigeeinlagen erfolgt.

4. Verfahren nach einem der Ansprüche 1 bis 3, **gekennzeichnet durch** eine mechanische Abtragung.

5. Verfahren nach einem der Ansprüche 1 bis 3, **gekennzeichnet durch** eine mechanische Abtragung mit anschließender Freilegung der Ausnehmung (6) bzw. des transparenten Kunststoffs (2) **durch** Laserabtragung.

6. Verfahren nach einem der Ansprüche 1 bis 5, **gekennzeichnet durch** Abtragen des Kragens (10) auf der vorderseitigen Wandungsfläche (11).

7. Verfahren nach einem der Ansprüche 3 bis 6, **gekennzeichnet durch** Einfärben der Eloxalschicht.

## Claims

1. A method for manufacturing metallic housing or positioning parts, which are provided with a display inlay made of transparent plastics material, comprising the following method steps:
Manufacture of the housing or positioning part (1, 3) as a forged or cast blank (4, 5),
Introduction of a recess (6) for the display inlay by means of a punch in a punching device, producing a raised section (7) of a rear wall surface (8) in the punching direction,
Constriction of the recess (6) by means of a key peeling deformation of the boundary walls (9) of the recess (6),
Injection of the transparent plastics material (2) into the recess (6) and optionally into a mould connected to the recess (6) in order to form a collar (10) on a front wall surface (11) in the direction of punching,
Erosion of the rear wall surface (8) with the raised section (7) by a fixed degree of thickness (12), which results in an exposure of the recess (6) or of the transparent plastics material (2).

2. A method according to claim 1, **characterised by** surface protection of the wall surface (8) exposed by erosion.

3. A method according to claim 2, **characterised by** surface protection by production of an eloxation layer if the housing or positioning parts (1, 3) are made of aluminium or an alloy containing aluminium, the eloxation being effected with the electrical contacting of each of the islands (13) within the display inlays electrically separated by the erosion.

4. A method according to one of claims 1 to 3, **characterised by** a mechanical erosion.

5. A method according to one of claims 1 to 3, **characterised by** a mechanical erosion with subsequent exposure of the recess (6) or of the transparent plastics material (2) by laser erosion.

6. A method according to one of claims 1 to 5, **characterised by** erosion of the collar (10) on the front wall surface (11).

7. A method according to one of claims 3 to 6, **characterised by** dyeing of the eloxation layer.

## Revendications

1. Procédé de fabrication de pièces de boîtiers ou de réglage existant en métal, qui sont pourvues d'un insert d'affichage en matière plastique transparente, les étapes suivantes de procédé consistant à :
fabriquer la pièce de boîtier ou de réglage (1, 3), en tant qu'ébauche (4, 5) forgée ou moulée ;
ménager un évidement (6) pour l'insert d'affichage, au moyen d'un poinçon d'estampage dans une installation d'estampage par repoussage (7) de la surface de paroi (8) arrière dans la direction d'estampage ;
dégorger l'évidement (6) par une déformation en clavette et coin des parois de délimitation (9) de l'évidement (6) ;
injecter la matière plastique transparente (2) dans l'évidement (6) et le cas échéant dans un moule relié avec l'évidement (6) pour former un bourrelet (10) sur une surface de paroi (11) avant dans la direction d'estampage ;
enlever la surface de paroi arrière (8) avec le repoussage (7) sur une épaisseur (12) déterminée, ce qui provoque le dégagement de l'évidement 6 ou de la matière plastique transparente (2).

2. Procédé selon la revendication 1, **caractérisé par** la protection superficielle de la surface de paroi (8) dégagée par enlèvement.

3. Procédé selon la revendication 2, **caractérisé par** la protection superficielle par réalisation d'une couche anodisée, lorsque les pièces de boîtiers ou de réglage (1, 3) sont en aluminium ou en un alliage d'aluminium, l'anodisation s'opérant par contact électrique de chacun des îlots (13) séparés électriquement par l'enlèvement de matière à l'intérieur des inserts d'affichage.

4. Procédé selon l'une des revendications 1 à 3, **caractérisé par** un enlèvement mécanique.

5. Procédé selon l'une des revendications 1 à 3, **caractérisé par** un enlèvement mécanique du repoussage avec dégagement consécutif de l'évidement (6) ou de la matière plastique transparente (2) par enlèvement par laser.

6. Procédé selon l'une des revendications 1 à 5, **caractérisé par** l'enlèvement du bourrelet (10) sur la surface de paroi avant (11).

7. Procédé selon l'une des revendications 3 à 6, **caractérisé par** la coloration de la couche anodisée.
